(19) **Europäisches Patentamt / European Patent Office / Office européen des brevets**

(11) **EP 4 357 380 A1**

(12) **EUROPEAN PATENT APPLICATION**
published in accordance with Art. 153(4) EPC

(43) Date of publication:
**24.04.2024  Bulletin 2024/17**

(21) Application number: **22853529.0**

(22) Date of filing: **05.08.2022**

(51) International Patent Classification (IPC):
**C08F 285/00** $^{(2006.01)}$     **C08F 279/04** $^{(2006.01)}$

(52) Cooperative Patent Classification (CPC):
**C08F 279/04; C08F 285/00**

(86) International application number:
**PCT/KR2022/011635**

(87) International publication number:
**WO 2023/014154 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021  KR 20210104040**
**04.08.2022  KR 20220097471**

(71) Applicant: **LG Chem, Ltd.**
**Yeongdeungpo-gu**
**Seoul 07336 (KR)**

(72) Inventors:
• **KIM, In Seok**
  **Daejeon 34122 (KR)**
• **CHAI, Joo Byung**
  **Daejeon 34122 (KR)**
• **JUNG, Yu Sung**
  **Daejeon 34122 (KR)**
• **KIM, Jong Beom**
  **Daejeon 34122 (KR)**
• **JEON, Tae Young**
  **Daejeon 34122 (KR)**

(74) Representative: **Plasseraud IP**
**66, rue de la Chaussée d'Antin**
**75440 Paris Cedex 09 (FR)**

(54) **METHOD FOR MANUFACTURING GRAFT COPOLYMER, GRAFT COPOLYMER, AND RESIN COMPOSITION COMPRISING SAME**

(57)    The present invention provides a method for preparing a graft copolymer for the application in a resin composition including a graft copolymer and a matrix resin, and relates to a method for preparing a graft copolymer maintaining impact properties such as impact strength and falling ball impact strength to the same or better levels, while improving flowability and subsequently improving processability, a graft copolymer prepared by the method and a resin composition including same.

EP 4 357 380 A1

**Description**

**TECHNICAL FIELD**

[Cross-reference to Related Applications]

The present application claims the benefit of priority based on Korean Patent Application No. 10-2021-0104040, filed on August 6, 2021, the entire contents of which are incorporated herein by reference.

Technical Field]

The present invention relates to a method for preparing a graft copolymer, a graft copolymer and a resin composition comprising same.

**BACKGROUND ART**

Acrylonitrile-butadiene-styrene (ABS) copolymers are prepared by graft copolymerization of styrene and acrylonitrile onto a butadiene rubber polymer. The ABS copolymers have excellent impact resistance, chemical resistance, thermal stability, colorability, fatigue resistance, rigidity and processability when compared to the conventional high-impact polystyrene (HIPS), and are used in parts such as interior and exterior materials of cars, office equipment, and various electrical and electronic products, or toys.
ABS copolymers are generally prepared through a method of emulsion polymerization, and used as materials for general resin compositions, flame retardant resin compositions, extrusion resin compositions, heat resistant resin compositions and transparent resin compositions according to the properties of a matrix resin mixed. Like this, since the ABS copolymers could be used as materials in various fields, efforts for satisfying physical properties required in various fields for the ABS copolymers in addition to the matrix resin are being continuously conducted.
Meanwhile, ABS copolymers are basically to be impact resistant. Accordingly, as a method for improving the impact resistance of the ABS copolymers, a method of controlling the ratio of monomers and maximizing a graft ratio to change the composition of monomers to be graft polymerized in and out of rubber particles has been suggested, but in this case, during preparing a resin composition including the ABS copolymer and a matrix resin, the deterioration in flow may arise to induce the problems of processability deterioration.
In addition, though the same ABS copolymer is applied in resin compositions including the ABS copolymer and a matrix resin, the physical properties of the ABS copolymer itself may not come out fully according to the type of the matrix resin, and defects of individually deteriorating physical properties such as impact resistance and processability may arise.

[Prior Art Document]

[Patent Document]

(Patent Document 1) JP1994-192346A

**DISCLOSURE OF THE INVENTION**

**TECHNICAL PROBLEM**

The task for solving in the present invention to solve the above-described problems mentioned in the background art, is to prepare a graft copolymer capable of maintaining impact properties to the same or better levels irrespective of the type of a matrix resin and improving flowability and processability, in a resin composition including a graft copolymer and a matrix resin.
That is, the present invention has been devised to solve the problems of the conventional technique, and an object is to provide a method for preparing a graft copolymer for the application to a resin composition including a graft copolymer and a matrix resin, by which impact properties such as impact strength and falling ball impact strength are maintained to the same or better levels, and flowability and consequently processability are improved.
In addition, another object of the present invention is to provide a graft copolymer prepared by the preparation method.
In addition, another object of the present invention is to provide a resin composition including the graft copolymer.

**TECHNICAL SOLUTION**

In order to solve the above-described tasks, the present invention provides a method for preparing a graft copolymer, a graft copolymer prepared thereby and a resin composition comprising same.

(1) The present invention provides a method for preparing a graft copolymer, comprising: a step of injecting a first monomer mixture and a first molecular weight modifier in batch and polymerizing in the presence of conjugated diene-based polymer latex to prepare preliminary graft copolymer latex comprising a preliminary graft copolymer (S10); and a step of injecting a second monomer mixture, a first molecular weight modifier and a second molecular weight modifier that is different from the first molecular weight modifier continuously and polymerizing in the presence of the preliminary graft copolymer latex prepared in step (S10) to prepare graft copolymer latex comprising a graft copolymer (S20), wherein the first monomer mixture comprises an aromatic vinyl-based monomer in 60 wt% to 85 wt%, and a vinylcyan-based monomer in 15 wt% to 40 wt%, and the second monomer mixture comprises an aromatic vinyl-based monomer in 73 wt% to 99 wt%, and a vinylcyan-based monomer in 1 wt% to 27 wt%.

(2) The present invention provides the method for preparing a graft copolymer according to (1), wherein the conjugated diene-based polymer latex comprises a conjugated diene-based polymer, and the conjugated diene-based polymer is injected in 50 parts by weight to 80 parts by weight based on 100 parts by weight of the total injection amount of the conjugated diene-based polymer, the aromatic vinyl-based monomer and the vinylcyan-based monomer.

(3) The present invention provides the method for preparing a graft copolymer according to (1) or (2), wherein the first monomer mixture comprises the vinylcyan-based monomer in 25 wt% to 40 wt%.

(4) The present invention provides the method for preparing a graft copolymer according to any one of (1) to (3), wherein the second monomer mixture comprises the vinylcyan-based monomer in 15 wt% to 25 wt%.

(5) The present invention provides the method for preparing a graft copolymer according to any one of (1) to (4), wherein the first molecular weight modifier is one or more selected from the group consisting of t-dodecyl mercaptan, n-dodecyl mercaptan, octyl mercaptan, carbon tetrachloride, methylene chloride, methylene bromide, tetraethylthiuram disulfide, dipentamethylenethiuram disulfide and diisopropyl xanthogen disulfide.

(6) The present invention provides the method for preparing a graft copolymer according to any one of (1) to (5), wherein a total injection amount of the first molecular weight modifier in step (S10) and step (S20) is 0.20 parts by weight to 0.40 parts by weight based on 100 parts by weight of the total injection amount of the conjugated diene-based polymer, the aromatic vinyl-based monomer and the vinylcyan-based monomer.

(7) The present invention provides the method for preparing a graft copolymer according to any one of (1) to (7), wherein the second molecular weight modifier is one or more selected from the group consisting of an $\alpha$-methylstyrene dimer, n-dodecyl mercaptan, octyl mercaptan, carbon tetrachloride, methylene chloride, methylene bromide, tetraethylthiuram disulfide, dipentamethylenethiuram disulfide and diisopropyl xanthogen disulfide.

(8) The present invention provides the method for preparing a graft copolymer according to any one of (1) to (8), wherein an injection amount of the second molecular weight modifier in step (S20) is 0.01 parts by weight to 0.40 parts by weight based on 100 parts by weight of the total injection amount of the conjugated diene-based polymer, the aromatic vinyl-based monomer and the vinylcyan-based monomer.

(9) The present invention provides a graft copolymer prepared according to the method for preparing a graft copolymer according to any one of (1) to (8), comprising: a conjugated diene-based polymer; a first graft layer formed by being penetrated into the conjugated diene-based polymer or at the outside; and a second graft layer formed by wrapping the first graft layer, wherein the first graft layer comprises 60 wt% to 85 wt% of an aromatic vinyl-based monomer unit, and 15 wt% to 40 wt% of a vinylcyan-based monomer unit, and the second graft layer comprises 73 wt% to 99 wt% of an aromatic vinyl-based monomer unit and 1 wt% to 27 wt% of a vinylcyan-based monomer unit.

(10) The present invention provides a resin composition comprising the graft copolymer according to (9) and a matrix resin.

(11) The present invention provides the resin composition according to (10), wherein the matrix resin comprises the aromatic vinyl-based monomer unit and the vinylcyan-based monomer unit.

(12) The present invention provides the resin composition according to (10) or (11), wherein the matrix resin comprises an $\alpha$-methylstyrene monomer unit and a vinylcyan-based monomer unit.

**ADVANTAGEOUS EFFECTS**

The graft copolymer prepared from the method for preparing a graft copolymer according to the present invention, in a resin composition including a graft copolymer and a matrix resin, may maintain impact properties to the same or better levels irrespective of the type of the matrix resin and may improve flowability and subsequently improve processability.

**BEST MODE FOR CARRYING OUT THE INVENTION**

Hereinafter, the present invention will be described in more detail to assist the understanding of the present invention.

It will be understood that words or terms used in the description and claims of the present invention shall not be interpreted as the meaning defined in commonly used dictionaries. It will be understood that the words or terms should be interpreted as having a meaning that is consistent with their meaning in the technical idea of the invention, based on the principle that an inventor may properly define the meaning of the words to best explain the invention.

The term "monomer unit" in the present invention may represent a component or a structure derived from the monomer or the material itself, in a particular embodiment, may mean a repeating unit formed in the polymer during polymerizing a polymer through the participation of the monomer injected in polymerization reaction.

The term "latex" in the present invention may mean a dispersed type of a polymer or a copolymer polymerized by polymerization in water, and particularly, may mean a dispersed type of the minute particles of a polymer with a rubbery phase or a copolymer with a rubbery phase polymerized by emulsion polymerization in a colloidal state in water.

The term "composition" used in the present invention includes a reaction product and a decomposition product formed from the materials of a corresponding composition as well as a mixture of materials including the corresponding composition.

The present invention provides a method for preparing a graft copolymer.

According to an embodiment of the present invention, the method for preparing a graft copolymer comprises: a step of injecting a first monomer mixture and a first molecular weight modifier in batch and polymerizing in the presence of conjugated diene-based polymer latex to prepare preliminary graft copolymer latex comprising a preliminary graft copolymer (S10); and a step of injecting a second monomer mixture, a first molecular weight modifier and a second molecular weight modifier that is different from the first molecular weight modifier continuously and polymerizing in the presence of the preliminary graft copolymer latex prepared in step (S10) to prepare graft copolymer latex comprising a graft copolymer (S20), wherein the first monomer mixture may comprise an aromatic vinyl-based monomer in 60 wt% to 85 wt%, and a vinylcyan-based monomer in 15 wt% to 40 wt%, and the second monomer mixture may comprise an aromatic vinyl-based monomer in 73 wt% to 99 wt%, and a vinylcyan-based monomer in 1 wt% to 27 wt%.

According to an embodiment of the present invention, the method for preparing a graft copolymer may prepare a core-shell type graft copolymer by forming a first graft layer by preliminarily graft polymerizing a first monomer mixture onto a conjugated diene-based polymer through step (S10) and by penetrating a monomer unit formed from the first monomer mixture into the conjugated diene-based polymer or forming at the outside, and by forming a second graft layer in a wrapping shape of the first graft layer through step (S20).

According to an embodiment of the present invention, step (S10) and step (S20) may be continuously performed in the graft copolymerization for preparing the graft copolymer, and particularly, may be performed by continuously injecting a second monomer mixture, a first molecular weight modifier, and a second molecular weight modifier that is different from the first molecular weight modifier during injecting and polymerizing a first monomer mixture and a first molecular weight modifier in batch in the presence of the conjugated diene-based polymer latex according to step (S10).

According to an embodiment of the present invention, step (S10) may be performed in the presence of conjugated diene-based polymer latex. Accordingly, the first monomer mixture injected in step (S10) may be graft polymerized onto a conjugated diene-based polymer included in the conjugated diene-based polymer latex to prepare a preliminary graft copolymer including a first graft layer formed through the penetration of a monomer unit formed from the first monomer mixture in the conjugated diene-based polymer, or at the outside. The conjugated diene-based polymer latex may be prepared from step (S1) for preparing a conjugated diene-based polymer. Step (S1) is a step of polymerizing a conjugated diene-based monomer for preparing a conjugated diene-based polymer, and the conjugated diene-based monomer may be one or more selected from the group consisting of 1,3-butadiene, 2,3-dimethyl-1,3-butadiene, piperylene, 3-butyl-1,3-octadiene, isoprene and 2-phenyl-1,3-butadiene, particularly, 1.3-butadiene.

According to an embodiment of the present invention, step (S1) may be performed by emulsion polymerization, and accordingly, a conjugated diene-based polymer latex type including the conjugated diene-based polymer may be obtained.

According to an embodiment of the present invention, step (S1) may be performed by radical polymerization using a peroxide-based, redox or azo-based initiator, and the redox initiator may be, for example, one or more selected from the group consisting of t-butyl hydroperoxide, diisopropylbenzene hydroperoxide and cumene hydroperoxide. In this case, stable polymerization environment may be provided.

According to an embodiment of the present invention, if the redox initiator is used, ferrous sulfate, sodium ethylenediaminetetraacetate or sodium formaldehyde sulfoxylate may be further included.

According to an embodiment of the present invention, an emulsifier used during the emulsion polymerization of step (S1) may be one or more selected from the group consisting of an anionic emulsifier, a cationic emulsifier and a nonionic emulsifier, particularly, one or more selected from the group consisting of alkylaryl sulfonate, alkalimethyl alkylsulfate, soap of fatty acid, alkali oleate, alkali rosinate, alkali laurate, sodium diethylhexyl phosphate, phosphonated polyoxyethylene alcohol and phosphonated polyoxyethylene phenol. In this case, there may be effects of providing stable polymerization environment. The emulsifier may be injected in, for example, 5.0 parts by weight or less, 3.0 parts by weight or less, or 0.5 parts by weight to 2.5 parts by weight based on 100 parts by weight of the total amount of the conjugated diene-based monomer injected in step (S1).

According to an embodiment of the present invention, the emulsion polymerization in step (S1) may be performed in an aqueous solvent, and the aqueous solvent may be ion exchange water.

According to an embodiment of the present invention, the conjugated diene-based polymer latex may include a conjugated diene-based polymer, and the conjugated diene-based polymer may be injected in 50 parts by weight to 80 parts by weight based on 100 parts by weight of the total injection amount of the conjugated diene-based polymer, the aromatic vinyl-based monomer and the vinylcyan-based monomer. Here, the injection amount of the conjugated diene-based polymer means the basis amount of the solid content of the conjugated diene-based polymer in the conjugated diene-based polymer latex. In a particular embodiment, the conjugated diene-based polymer may be 50 parts by weight or more, 52 parts by weight or more, 54 parts by weight or more, 56 parts by weight or more, 58 parts by weight or more or 60 parts by weight or more, and 80 parts by weight or less, 75 parts by weight or less, 70 parts by weight or less, 68 parts by weight or less, 66 parts by weight or less, 64 parts by weight or less, 62 parts by weight or less, or 60 parts by weight or less based on 100 parts by weight of the total injection amount of the conjugated diene-based polymer, the aromatic vinyl-based monomer and the vinylcyan-based monomer, and within this range, the deterioration of compatibility against the matrix resin of the graft copolymer may be prevented, and impact resistance may be improved.

According to an embodiment of the present invention, the first monomer mixture injected in step (S10) may include an aromatic vinyl-based monomer and a vinylcyan-based monomer. In this case, during preparing a resin composition including the graft copolymer, in order to improve flowability and subsequently improve processability while maintaining impact properties such as impact resistance to the same or better levels irrespective of the type of the matrix resin, it is important to control the amount of the vinylcyan-based monomer in the first monomer mixture. In a particular embodiment, the first monomer mixture may include the vinylcyan-based monomer in 15 wt% or more, 16 wt% or more, 17 wt% or more, 18 wt% or more, 19 wt% or more, 20 wt% or more, 21 wt% or more, 22 wt% or more, 23 wt% of more, 24 wt% or more, or 25 wt% or more, and 40 wt% or less, 39 wt% or less, 38 wt% or less, 37 wt% or less, 36 wt% or less, 35 wt% or less, 34 wt% or less, 33 wt% or less, 32 wt% or less, 31 wt% or less, or 30 wt% or less. Within this range, the marked increase in the middle of and at the terminal of polymerization and the deviation from a temperature range controlled during polymerization may be prevented during the polymerization of the graft copolymer, impact strength against the general-purpose matrix resin such as a styrene-acrylonitrile copolymer and flowability may be sufficiently secured, and the deterioration of impact strength against the heat resistant matrix resin such as an $\alpha$-methylstyrene-acrylonitrile copolymer may be prevented.

According to an embodiment of the present invention, the first monomer mixture may include the aromatic vinyl-based monomer in 60 wt% or more, 61 wt% or more, 62 wt% or more, 63 wt% or more, 64 wt% or more, 65 wt% or more, 66 wt% or more, 67 wt% or more, 68 wt% or more, 69 wt% or more or 70 wt% or more, and 85 wt% or less, 84 wt% or less, 83 wt% or less, 82 wt% or less, 81 wt% or less, 80 wt% or less, 79 wt% or less, 78 wt% or less, 77 wt% or less, 76 wt% or less, or 75 wt% or less according to the amount of the vinylcyan-based monomer. The first monomer mixture may further include a vinyl-based monomer copolymerizable with the conjugated diene-based polymer, the aromatic vinyl-based monomer and the vinylcyan-based monomer, as necessary in addition to the aromatic vinyl-based monomer and the vinylcyan-based monomer.

According to an embodiment of the present invention, the first monomer mixture may be injected in 5 parts by weight to 20 parts by weight based on 100 parts by weight of the total injection amount of the conjugated diene-based polymer, the aromatic vinyl-based monomer and the vinylcyan-based monomer, injected during preparing the graft copolymer. In a particular embodiment, the first monomer mixture may be 5 parts by weight or more, 6 parts by weight or more, 7 parts by weight or more, 8 parts by weight or more, 9 parts by weight or more or 10 parts by weight or more, and 20 parts by weight or less, 19 parts by weight or less, 18 parts by weight or less, 17 parts by weight or less, 16 parts by weight or less or 15 parts by weight or less based on 100 parts by weight of the total injection amount of the conjugated diene-based polymer, the aromatic vinyl-based monomer and the vinylcyan-based monomer, and within this range, the deterioration of compatibility with the matrix resin of the graft copolymer may be prevented, and impact resistance may be improved.

According to an embodiment of the present invention, the second monomer mixture injected in step (S20) may include an aromatic vinyl-based monomer and a vinylcyan-based monomer. In this case, the aromatic vinyl-based monomer of the first monomer mixture and the aromatic vinyl-based monomer of the second monomer mixture may be the same or different from each other. In addition, the vinylcyan-based monomer of the first monomer mixture and the vinylcyan-based monomer of the second monomer mixture may be the same or different from each other. Meanwhile, during preparing the resin composition including the graft copolymer, in order to improve flowability and subsequently improve processability while maintaining impact properties such as impact resistance irrespective of the type of the matrix resin, it is important to control the vinylcyan-based monomer content in the second monomer mixture in addition to control the vinylcyan-based monomer content in the first monomer mixture. If the vinylcyan-based monomer contents in the first monomer mixture and the second monomer mixture are not suitably controlled like this, impact strength against the heat resistant matrix resin such as an $\alpha$-methylstyrene-acrylonitrile copolymer could not be secured, though impact strength against a general-purpose matrix resin such as a styrene-acrylonitrile copolymer could be secured. Accordingly, in a particular embodiment, the second monomer mixture may include the vinylcyan-based monomer in 1 wt% or more, 5 wt% or more, 10 wt% or more, 11 wt% or more, 12 wt% or more, 13 wt% or more, 14 wt% or more, 15 wt% or more, 16 wt% or more, 17 wt% or more, 18 wt% or more, 19 wt% or more, or 20 wt% or more, and 27 wt% or less, 26 wt% or less, 25 wt% or less, 24 wt% or less, 23 wt% or less, 22 wt% or less, 21 wt% or less, or 20 wt% or less.

According to an embodiment of the present invention, the second monomer mixture may include the aromatic vinyl-based monomer in 73 wt% or more, 74 wt% or more, 75 wt% or more, 76 wt% or more, 77 wt% or more, 78 wt% or more, 79 wt% or more, or 80 wt% or more, and 99 wt% or less, 95 wt% or less, 90 wt% or less, 89 wt% or less, 88 wt% or less, 87 wt% or less, 86 wt% or less, 85 wt% or less, 84 wt% or less, 83 wt% or less, 82 wt% or less, 81 wt% or less, or 80 wt% or less, according to the amount of the vinylcyan-based monomer. The second monomer mixture may further include a vinyl-based monomer copolymerizable with a conjugated diene-based polymer, an aromatic vinyl-based monomer and a vinylcyan-based monomer as necessary, in addition to the aromatic vinyl-based monomer and the vinylcyan-based monomer.

According to an embodiment of the present invention, the second monomer mixture may be injected in 10 parts by weight to 45 parts by weight based on 100 parts by weight of the total injection amount of the conjugated diene-based polymer, the aromatic vinyl-based monomer and the vinylcyan-based monomer, injected during preparing the graft copolymer. In a particular embodiment, the second monomer mixture may be 10 parts by weight or more, 15 parts by weight or more, 20 parts by weight or more or 25 parts by weight, and 45 parts by weight or less, 40 parts by weight or less, 35 parts by weight or less or 30 parts by weight or less based on 100 parts by weight of the total injection amount of the conjugated diene-based polymer, the aromatic vinyl-based monomer and the vinylcyan-based monomer. Within this range, the deterioration of compatibility with the matrix resin of the graft copolymer may be prevented, and impact resistance may be improved.

According to an embodiment of the present invention, the aromatic vinyl-based monomer may be one or more selected from the group consisting of styrene, $\alpha$-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnapthalene, particularly, styrene.

According to an embodiment of the present invention, the vinylcyan-based monomer may be one or more selected from the group consisting of acrylonitrile, methacrylonitrile, ethacrylonitrile, phenyl acrylonitrile and $\alpha$-chloro-acrylonitrile, particularly, acrylonitrile.

According to an embodiment of the present invention, step (S10) and step (S20) may be performed by injecting a first molecular weight modifier together with a first monomer mixture and a second monomer mixture. Like this, the first molecular weight modifier may be injected in both step (S10) and step (S20), but may be injected in step (S10) together with the first monomer mixture in batch, and may be injected in step (S20) with the second monomer mixture continuously. In this case, the absolute amount of the first molecular weight modifier injected during preparing the graft copolymer may be reduced, and by injecting as described above in the same amount based on the total injection amount of the first molecular weight modifier, the flowability of the graft copolymer may be improved, and at the same time, the deterioration of mechanical properties such as impact resistance may be prevented.

According to an embodiment of the present invention, the first molecular weight modifier may be one or more selected from the group consisting of t-dodecyl mercaptan, n-dodecyl mercaptan, octyl mercaptan, carbon tetrachloride, methylene chloride, methylene bromide, tetraethylthiuram disulfide, dipentamethylenethiuram disulfide and diisopropyl xanthogen disulfide, particularly, t-dodecyl mercaptan.

According to an embodiment of the present invention, the total injection amount of the first molecular weight modifier in step (S10) and step (S20) may be 0.20 parts by weight to 0.40 parts by weight based on 100 parts by weight of the total injection amount of the conjugated diene-based polymer, the aromatic vinyl-based monomer and the vinylcyan-based monomer. In a particular embodiment, the total injection amount of the first molecular weight modifier in step (S10) and step (S20) may be 0.20 parts by weight or more, 0.21 parts by weight or more, 0.22 parts by weight or more, 0.23 parts by weight or more, 0.24 parts by weight or more, 0.25 parts by weight or more, 0.26 parts by weight or more, 0.27 parts by weight or more, 0.28 parts by weight or more, 0.29 parts by weight or more, or 0.30 parts by weight or more, and 0.40 parts by weight or less, 0.38 parts by weight or less, 0.36 parts by weight or less, 0.34 parts by weight or less, 0.32 parts by weight or less, 0.30 parts by weight or less, 0.28 parts by weight or less, 0.26 parts by weight or less, 0.24 parts by weight or less, or 0.22 parts by weight or less, based on 100 parts by weight of the total injection amount of the conjugated diene-based polymer, the aromatic vinyl-based monomer and the vinylcyan-based monomer.

According to an embodiment of the present invention, step (20) may be performed by continuously injecting a second molecular weight modifier that is different from the first molecular weight modifier together with the second monomer mixture, in addition to the first molecular weight modifier. In this case, different from the first molecular weight modifier, the second molecular weight modifier may be injected for the purpose of changing only a graft ratio without changing a molecular weight. In a particular embodiment, the second molecular weight modifier may be one or more selected from the group consisting of an $\alpha$-methylstyrene dimer, n-dodecyl mercaptan, octyl mercaptan, carbon tetrachloride, methylene chloride, methylene bromide, tetraethylthiuram disulfide, dipentamethylenethiuram disulfide and diisopropyl xanthogen disulfide. In a particular embodiment according to the injection purpose of the second molecular weight modifier, the $\alpha$-methylstyrene dimer may be used.

According to an embodiment of the present invention, the total injection amount of the second molecular weight modifier in step (S20) may be 0.01 parts by weight to 0.40 parts by weight based on 100 parts by weight of the total injection amount of the conjugated diene-based polymer, the aromatic vinyl-based monomer and the vinylcyan-based monomer. In a particular embodiment, the total injection amount of the second molecular weight modifier in step (S20) may be 0.01 parts by weight or more, 0.02 parts by weight or more, 0.03 parts by weight or more, 0.04 parts by weight or more, 0.05 parts by weight or more, 0.06 parts by weight or more, 0.07 parts by weight or more, 0.08 parts by weight or more, 0.09 parts by weight or more, or 0.10 parts by weight or more, and 0.40 parts by weight or less, 0.35 parts by weight or less, 0.30 parts by weight or less, 0.25 parts by weight or less, 0.20 parts by weight or less, 0.18 parts by weight or less, 0.16 parts by weight or less, 0.15 parts by weight or less, 0.14 parts by weight or less, 0.13 parts by weight or less, 0.12 parts by weight or less, 0.11 parts by weight or less, or 0.10 parts by weight or less, based on 100 parts by weight of the total injection amount of the conjugated diene-based polymer, the aromatic vinyl-based monomer and the vinylcyan-based monomer. Within this range, the change of only the graft ratio may be induced without changing the molecular weight.

According to an embodiment of the present invention, the graft polymerization in step (S10) and step (S20) may be performed by emulsion polymerization, and the emulsion polymerization may be performed in the presence of a modifier. The emulsifier may be one or more selected from the group consisting of an anionic emulsifier, a cationic emulsifier and a nonionic emulsifier, in a particular embodiment, may be one or more selected from the group consisting of alkylaryl sulfonate, alkalimethyl alkylsulfate, soap of fatty acid, alkali oleate, alkali rosinate, alkali laurate, sodium diethylhexyl phosphate, phosphonated polyoxyethylene alcohol and phosphonated polyoxyethylene phenol.

According to an embodiment of the present invention, the graft polymerization in step (S10) and step (S20) may be performed by radical polymerization using a peroxide-based, redox, or azo-based initiator, and the redox initiator may be one or more selected from the group consisting of t-butyl hydroperoxide, diisopropylbenzene hydroperoxide and cumene hydroperoxide, and in this case, effects of providing stable polymerization environment may be achieved. In addition, if the redox initiator is used, the polymerization may be performed by further including ferrous sulfate, dextrose or sodium pyrophosphate as the redox catalyst.

According to an embodiment of the present invention, the graft polymerization in step (S10) and step (S20) may be performed in an aqueous solvent, and the aqueous solvent may be ion exchange water. Accordingly, the graft copolymer prepared in step (S20) may be obtained in a latex type of graft copolymer particles dispersed as a colloidal phase in the aqueous solvent.

The present invention provides a graft copolymer.

According to an embodiment of the present invention, the graft copolymer may be one prepared according to the above-explained method for preparing a graft copolymer. In a particular embodiment, the graft copolymer may include: a conjugated diene-based polymer; a first graft layer formed by being penetrated into the conjugated diene-based polymer or at the outside; and a second graft layer formed by wrapping the first graft layer, wherein the first graft layer comprises 60 wt% to 85 wt% of an aromatic vinyl-based monomer unit, and 15 wt% to 40 wt% of a vinylcyan-based monomer unit, and the second graft layer comprises 73 wt% to 99 wt% of an aromatic vinyl-based monomer unit and 1 wt% to 27 wt% of a vinylcyan-based monomer unit.

According to an embodiment of the present invention, the conjugated diene-based polymer may be derived from the conjugated diene-based polymer included in the conjugated diene-based polymer latex injected in step (S10) of the method for preparing a graft copolymer, the first graft layer may be derived from the first monomer mixture injected in step (S10) of the method for preparing a graft copolymer, and the second graft layer may be derived from the second monomer mixture injected in step (S20) of the method for preparing a graft copolymer.

According to an embodiment of the present invention, the graft copolymer may include the conjugated diene-based polymer according to the amount of the conjugated diene-based polymer injected in the method for preparing a graft copolymer, and the first graft layer and the second graft layer may also include the aromatic vinyl-based monomer unit and the vinylcyan-based monomer unit according to the amounts of the first monomer mixture and the second monomer mixture injected in the method for preparing a graft copolymer, the amount of each monomer in the first monomer mixture, and the amount of each monomer in the second monomer mixture.

According to an embodiment of the present invention, the graft copolymer may undergo graft polymerization step by step according to step (S10) and step (S20) of the above-explained method for preparing a graft copolymer, and may show above-described structural specificity.

According to an embodiment of the present invention, the graft copolymer may have a graft ratio of 34.0% to 44.0%. The graft ratio may be controlled from the second molecular weight modifier in the method for preparing a graft copolymer, and in a particular embodiment, may be 34.0% or more, 36.0% or more, 38.0% or more, 38.5% or more, or 38.6% or more, and 44.0% or less, 43.0% or less, 42.5% or less, or 42.2% or less. Within this range, impact resistance and flowability against a general-purpose matrix resin such as a styrene-acrylonitrile copolymer may be sufficiently secured together with the vinylcyan-based monomer unit content in the first graft layer and the second graft layer, and the deterioration of impact strength against a heat resistant matrix resin such as an $\alpha$-methylstyrene-acrylonitrile copolymer, may be prevented.

According to an embodiment of the present invention, the graft copolymer may have a weight average molecular weight of 80,000 g/mol to 95,000 g/mol. The weight average molecular weight may be controlled from the first molecular weight modifier in the method for preparing a graft copolymer, and may particularly be 80,000 g/mol or more, 80,400 g/mol or more, 81,000 g/mol or more, 81,500 g/mol or more, or 81,800 g/mol or more, and 95,000 g/mol or less, 94,000 g/mol or less, 93,000 g/mol or less, 92,000 g/mol or less, 91,000 g/mol or less, 90,000 g/mol or less, 89,000 g/mol or less, or 88,000 g/mol or less. Within this range, impact strength and flowability against a general-purpose matrix resin such as a styrene-acrylonitrile copolymer may be sufficiently secured together with the vinylcyan-based monomer unit content in the first graft layer and the second graft layer, and the deterioration of impact strength against a heat resistant matrix resin such as an $\alpha$-methylstyrene-acrylonitrile copolymer may be prevented.

The present invention provides a resin composition.

According to an embodiment of the present invention, the resin composition may include the graft copolymer and a matrix resin. The graft copolymer may be prepared according to the method for preparing a graft copolymer, and may improve flowability and processability while maintaining impact properties to the same or better levels irrespective of the type of the matrix resin. Accordingly, the resin composition may have excellent impact resistance and processability irrespective of the type of the matrix resin.

According to an embodiment of the present invention, the resin composition may include the graft copolymer in 10 parts by weight to 40 parts by weight based on 100 parts by weight of the total amount of the graft copolymer and the matrix resin, particularly, 10 parts by weight or more, 15 parts by weight or more, 20 parts by weight or more, 21 parts by weight or more, 22 parts by weight or more, 23 parts by weight or more, 24 parts by weight or more or 25 parts by weight or more, and 40 parts by weight or less, 35 parts by weight or less, 30 parts by weight or less, 29 parts by weight or less, 28 parts by weight or less, 27 parts by weight or less, 26 parts by weight or less, or 25 parts by weight or less. In this case, the application amount of the graft copolymer may be changed in the resin composition according to the type of the matrix resin.

According to an embodiment of the present invention, according to the amount of the graft copolymer, the resin composition may include the matrix resin in 60 parts by weight to 90 parts by weight based on 100 parts by weight of the total amount of the graft copolymer and the matrix resin, particularly, 60 parts by weight or more, 65 parts by weight or more, 70 parts by weight or more, 71 parts by weight or more, 72 parts by weight or more, 73 parts by weight or more, 74 parts by weight or more or 75 parts by weight or more, and 90 parts by weight or less, 85 parts by weight or less, 80 parts by weight or less, 79 parts by weight or less, 78 parts by weight or less, 77 parts by weight or less, 76 parts by weight or less or 75 parts by weight or less. In this case, the application amount of the matrix resin may be changed in the resin composition according to the type of the matrix resin.

According to an embodiment of the present invention, the matrix resin may include an aromatic vinyl-based monomer unit and a vinylcyan-based monomer unit. Here, an aromatic vinyl-based monomer for forming the aromatic vinyl-based monomer unit may be one or more selected from the group consisting of styrene, $\alpha$-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene, particularly, styrene or $\alpha$-methylstyrene. In addition, a vinylcyan-based monomer for forming the vinylcyan-based monomer unit may be one or more selected from the group consisting of acrylonitrile, methacrylonitrile, ethacrylonitrile, phenyl acrylonitrile and $\alpha$-chloroacrylonitrile, particularly, acrylonitrile.

According to an embodiment of the present invention, if the resin composition includes a general-purpose matrix resin as the matrix resin of the resin composition, the matrix resin may include a styrene monomer unit and a vinylcyan-based monomer unit, particularly, a styrene-acrylonitrile copolymer.

According to an embodiment of the present invention, if the resin composition includes a styrene monomer unit and a vinylcyan-based monomer unit as the matrix resin, the resin composition may have a flow index measured under 220°C and 10 kg conditions by an ASTM D1238 method of 17.0 g/10 min or more, 17.5 g/10 min or more, 18.0 g/10 min or more, 18.5 g/10 min or more, 19.0 g/10 min or more, 19.5 g/10 min or more or 20.0 g/10 min or more, and 25.0 g/10 min or less, 24.5 g/10 min or less, 24.0 g/10 min or less, 23.5 g/10 min or less, 23.0 g/10 min or less, 22.5 g/10 min or less, 22.0 g/10 min or less, 21.5 g/10 min or less, 21.0 g/10 min or less, 20.5 g/10 min or less or 20.0 g/10 min or less.

According to an embodiment of the present invention, if the resin composition includes the styrene monomer unit and the vinylcyan-based monomer unit as the matrix resin, the resin composition may have impact strength measured at room temperature (23°C) using a specimen with a thickness of 1/4 inch by an ASTM D256 method of 33.5 kgf-cm/cm or more, 34.0 kgf-cm/cm or more, 34.5 kgf-cm/cm or more or 35.0 kgf-cm/cm or more and 50.0 kgf-cm/cm or less, 45.0 kgf-cm/cm or less, 40.0 kgf-cm/cm or less, 39.0 kgf-cm/cm or less, 38.0 kgf-cm/cm or less, 37.0 kgf-cm/cm or less or 36.0 kgf-cm/cm or less.

According to an embodiment of the present invention, if the resin composition includes a heat resistant matrix resin as the matrix resin, the matrix may include an α-methylstyrene monomer unit and a vinylcyan-based monomer unit, particularly, an α-methylstyrene-acrylonitrile copolymer.

According to an embodiment of the present invention, if the resin composition includes an α-methylstyrene monomer unit and a vinylcyan-based monomer unit as the matrix resin, the resin composition may have a flow index measured under 220°C and 10 kg conditions by an ASTM D1238 method of 5.0 g/10 min or more, 5.1 g/10 min or more, 5.2 g/10 min or more, 5.3 g/10 min or more, 5.4 g/10 min or more, 5.5 g/10 min or more, 5.6 g/10 min or more, 5.7 g/10 min or more, 5.8 g/10 min or more, 5.9 g/10 min or more, 6.0 g/10 min or more, 6.1 g/10 min or more, 6.2 g/10 min or more, 6.3 g/10 min or more or 6.4 g/10 min or more, and 8.0 g/10 min or less, 7.5 g/10 min or less, 7.0 g/10 min or less, 6.5 g/10 min or less, 6.4 g/10 min or less, 6.3 g/10 min or less, 6.2 g/10 min or less, 6.1 g/10 min or less, 6.0 g/10 min or less or 5.5 g/10 min or less.

According to an embodiment of the present invention, if the resin composition includes an α-methylstyrene monomer unit and a vinylcyan-based monomer unit as the matrix resin, the resin composition may have impact strength measured at room temperature (23°C) using a specimen with a thickness of 1/4 inch by an ASTM D256 method of 13.0 kgf-cm/cm or more, 13.5 kgf-cm/cm or more, 14.0 kgf-cm/cm or more, 14.5 kgf-cm/cm or more or 15.0 kgf-cm/cm or more, and 20.0 kgf-cm/cm or less, 19.0 kgf-cm/cm or less, 18.0 kgf-cm/cm or less, 17.0 kgf-cm/cm or less, 16.0 kgf-cm/cm or less, 15.0 kgf-cm/cm or less or 14.0 kgf-cm/cm or less.

According to an embodiment of the present invention, the resin composition may include additives such as an antioxidant, a thermal stabilizer, a processing aid, a colorant and a lubricant, known in the field of the present invention in common amounts, as necessary.

Hereinafter, embodiments of the present invention will be explained in detail so that a person skilled in the art could easily perform the present invention. However, the present invention may be accomplished in various other types and is not limited to the embodiments explained herein.

**Examples and Comparative Examples**

**Example 1**

<Preparation of graft copolymer>

To a nitrogen-substituted polymerization reactor, 100 parts by weight of ion exchange water and 60 parts by weight (based on the solid content) of polybutadiene latex (polybutadiene average particle diameter of 310 nm) were injected one by one. Then, to the polymerization reactor, 10.2 parts by weight of styrene and 1.8 parts by weight of acrylonitrile (acrylonitrile 15 wt%) as a first monomer mixture, 0.05 parts by weight of dextrose, 0.03 parts by weight of tetrasodium pyrophosphate, 0.001 parts by weight of ferrous sulfate, 0.12 parts by weight of t-butyl hydroperoxide, and 0.20 parts by weight of t-dodecyl mercaptan as a first molecular weight modifier, were injected in batch, followed by stirring at 50°C for 30 minutes. Then, to the polymerization reactor, 11 parts by weight of ion exchange water, 20.6 parts by weight of styrene and 7.4 parts by weight of acrylonitrile (acrylonitrile 26.4 wt%) as a second monomer mixture, 0.3 parts by weight of potassium oleate, 0.1 parts by weight of cumene hydroperoxide, 0.10 parts by weight of t-dodecyl mercaptan as a first molecular weight modifier and 0.10 parts by weight of α-methylstyrene dimer as a second molecular weight modifier, were continuously injected and polymerized at a certain rate for 100 minutes, and in this case, the temperature of the polymerization reactor was elevated at a certain rate to 70°C.

After finishing the injection, 0.05 parts by weight of dextrose, 0.03 parts by weight of tetrasodium pyrophosphate, 0.001 parts by weight of ferrous sulfate and 0.05 parts by weight of cumene hydroperoxide were injected to the polymerization reactor in batch, and in this case, polymerization was performed while elevating the temperature of the polymerization reactor to 80°C over 1 hour, and the polymerization was finished to prepare graft copolymer latex.

<Preparation of graft copolymer particulate material>

To 100 parts by weight (based on the solid content) of the graft copolymer latex thus prepared, 2 parts by weight of magnesium sulfate (MgSO$_4$) was injected, followed by coagulating at 82°C. Then, aging at 89°C for 10 minutes, washing, dehydrating and drying were performed to prepare a graft copolymer particulate material.

**Example 2**

The same method as in Example 1 was performed except for injecting 9.6 parts by weight of styrene and 2.4 parts by weight of acrylonitrile (acrylonitrile 20 wt%) instead of 10.2 parts by weight of styrene and 1.8 parts by weight of acrylonitrile (acrylonitrile 15 wt%) as the first monomer mixture, and 21.2 parts by weight of styrene and 6.8 parts by weight of acrylonitrile (acrylonitrile 24.3 wt%) instead of 20.6 parts by weight of styrene and 7.4 parts by weight of acrylonitrile (acrylonitrile 26.4 wt%) as the second monomer mixture, in Example 1 to prepare a graft copolymer particulate material.

**Example 3**

The same method as in Example 1 was performed except for injecting 9.0 parts by weight of styrene and 3.0 parts by weight of acrylonitrile (acrylonitrile 25 wt%) instead of 10.2 parts by weight of styrene and 1.8 parts by weight of acrylonitrile (acrylonitrile 15 wt%) as the first monomer mixture, and 21.8 parts by weight of styrene and 6.2 parts by weight of acrylonitrile (acrylonitrile 22.1 wt%) instead of 20.6 parts by weight of styrene and 7.4 parts by weight of acrylonitrile (acrylonitrile 26.4 wt%) as the second monomer mixture, in Example 1 to prepare a graft copolymer particulate material.

**Example 4**

The same method as in Example 1 was performed except for injecting 8.4 parts by weight of styrene and 3.6 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, and 22.4 parts by weight of styrene and 5.6 parts by weight of acrylonitrile (acrylonitrile 20.0 wt%) instead of 20.6 parts by weight of styrene and 7.4 parts by weight of acrylonitrile (acrylonitrile 26.4 wt%) as the second monomer mixture, in Example 1 to prepare a graft copolymer particulate material.

**Example 5**

The same method as in Example 1 was performed except for injecting 7.2 parts by weight of styrene and 4.8 parts by weight of acrylonitrile (acrylonitrile 40 wt%) instead of 10.2 parts by weight of styrene and 1.8 parts by weight of acrylonitrile (acrylonitrile 15 wt%) as the first monomer mixture, and 23.6 parts by weight of styrene and 4.4 parts by weight of acrylonitrile (acrylonitrile 15.7 wt%) instead of 20.6 parts by weight of styrene and 7.4 parts by weight of acrylonitrile (acrylonitrile 26.4 wt%) as the second monomer mixture, in Example 1 to prepare a graft copolymer particulate material.

**Example 6**

The same method as in Example 1 was performed except for injecting 8.4 parts by weight of styrene and 3.6 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, 0.15 parts by weight instead of 0.20 parts by weight of t-dodecyl mercaptan as the first molecular weight modifier, and 22.4 parts by weight of styrene and 5.6 parts by weight of acrylonitrile (acrylonitrile 20.0 wt%) instead of 20.6 parts by weight of styrene and 7.4 parts by weight of acrylonitrile (acrylonitrile 26.4 wt%) as the second monomer mixture, in Example 1 to prepare a graft copolymer particulate material.

**Example 7**

The same method as in Example 1 was performed except for injecting 8.4 parts by weight of styrene and 3.6 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, 0.10 parts by weight instead of 0.20 parts by weight of t-dodecyl mercaptan as the first molecular weight modifier, and 22.4 parts by weight of styrene and 5.6 parts by weight of acrylonitrile (acrylonitrile 20.0 wt%) instead of 20.6 parts by weight of styrene and 7.4 parts by weight of acrylonitrile (acrylonitrile 26.4 wt%) as the second monomer mixture, in Example 1 to prepare a graft copolymer particulate material.

**Example 8**

The same method as in Example 1 was performed except for injecting 8.4 parts by weight of styrene and 3.6 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, 22.4 parts by weight of styrene and 5.6 parts by weight of acrylonitrile (acrylonitrile 20.0 wt%) instead of 20.6 parts by weight of styrene and 7.4 parts by weight of acrylonitrile (acrylonitrile 26.4 wt%) as the second monomer mixture, and 0.05 parts by weight instead of 0.10 parts by weight of an α-methylstyrene dimer as the second molecular weight modifier during injecting the second monomer mixture, in Example 1 to prepare a graft copolymer particulate material.

### Example 9

The same method as in Example 1 was performed except for injecting 8.4 parts by weight of styrene and 3.6 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, 22.4 parts by weight of styrene and 5.6 parts by weight of acrylonitrile (acrylonitrile 20.0 wt%) instead of 20.6 parts by weight of styrene and 7.4 parts by weight of acrylonitrile (acrylonitrile 26.4 wt%) as the second monomer mixture, and 0.15 parts by weight instead of 0.10 parts by weight of an α-methylstyrene dimer as the second molecular weight modifier during injecting the second monomer mixture, in Example 1 to prepare a graft copolymer particulate material.

### Example 10

The same method as in Example 1 was performed except for injecting 8.4 parts by weight of styrene and 3.6 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, 22.4 parts by weight of styrene and 5.6 parts by weight of acrylonitrile (acrylonitrile 20.0 wt%) instead of 20.6 parts by weight of styrene and 7.4 parts by weight of acrylonitrile (acrylonitrile 26.4 wt%) as the second monomer mixture, and 0.20 parts by weight instead of 0.10 parts by weight of an α-methylstyrene dimer as the second molecular weight modifier during injecting the second monomer mixture, in Example 1 to prepare a graft copolymer particulate material.

### Example 11

The same method as in Example 1 was performed except for injecting 65 parts by weight instead of 60 parts by weight of the polybutadiene latex based on the solid content, 7.35 parts by weight of styrene and 3.15 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, 0.16 parts by weight instead of 0.20 parts by weight of t-dodecyl mercaptan as the first molecular weight modifier during injecting the first monomer mixture, 19.6 parts by weight of styrene and 4.9 parts by weight of acrylonitrile (acrylonitrile 20.0 wt%) instead of 20.6 parts by weight of styrene and 7.4 parts by weight of acrylonitrile (acrylonitrile 26.4 wt%) as the second monomer mixture, and 0.05 parts by weight instead of 0.10 parts by weight of t-dodecyl mercaptan as the first molecular weight modifier during injecting the second monomer mixture, in Example 1 to prepare a graft copolymer particulate material.

### Example 12

The same method as in Example 1 was performed except for injecting 70 parts by weight instead of 60 parts by weight of the polybutadiene latex based on the solid content, 6.3 parts by weight of styrene and 2.7 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, 0.10 parts by weight instead of 0.20 parts by weight of t-dodecyl mercaptan as the first molecular weight modifier during injecting the first monomer mixture, 16.8 parts by weight of styrene and 4.2 parts by weight of acrylonitrile (acrylonitrile 20.0 wt%) instead of 20.6 parts by weight of styrene and 7.4 parts by weight of acrylonitrile (acrylonitrile 26.4 wt%) as the second monomer mixture, and 0.05 parts by weight instead of 0.10 parts by weight of t-dodecyl mercaptan as the first molecular weight modifier during injecting the second monomer mixture, in Example 1 to prepare a graft copolymer particulate material.

### Comparative Example 1

The same method as in Example 1 was performed except for injecting 8.4 parts by weight of styrene and 3.6 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, and 22.4 parts by weight of styrene and 5.6 parts by weight of acrylonitrile (acrylonitrile 20.0 wt%) instead of 20.6 parts by weight of styrene and 7.4 parts by weight of acrylonitrile (acrylonitrile 26.4 wt%) as the second monomer mixture, and not injecting an α-methylstyrene dimer as the second molecular weight modifier during injecting the second monomer mixture, in Example 1 to prepare a graft copolymer particulate material.

**Comparative Example 2**

The same method as in Example 1 was performed except for injecting 12.0 parts by weight of styrene without injecting acrylonitrile (acrylonitrile 0 wt%) instead of 10.2 parts by weight of styrene and 1.8 parts by weight of acrylonitrile (acrylonitrile 15 wt%) as the first monomer mixture, and 18.8 parts by weight of styrene and 9.2 parts by weight of acrylonitrile (acrylonitrile 32.9 wt%) instead of 20.6 parts by weight of styrene and 7.4 parts by weight of acrylonitrile (acrylonitrile 26.4 wt%) as the second monomer mixture, in Example 1 to prepare a graft copolymer particulate material.

**Comparative Example 3**

The same method as in Example 1 was performed except for injecting 10.8 parts by weight of styrene and 1.2 parts by weight of acrylonitrile (acrylonitrile 10 wt%) instead of 10.2 parts by weight of styrene and 1.8 parts by weight of acrylonitrile (acrylonitrile 15 wt%) as the first monomer mixture, and 20.0 parts by weight of styrene and 8.0 parts by weight of acrylonitrile (acrylonitrile 28.6 wt%) instead of 20.6 parts by weight of styrene and 7.4 parts by weight of acrylonitrile (acrylonitrile 26.4 wt%) as the second monomer mixture, in Example 1 to prepare a graft copolymer particulate material.

**Comparative Example 4**

The same method as in Example 1 was performed except for injecting 8.4 parts by weight of styrene and 3.6 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, and 19.6 parts by weight of styrene and 8.4 parts by weight of acrylonitrile (acrylonitrile 30.0 wt%) instead of 20.6 parts by weight of styrene and 7.4 parts by weight of acrylonitrile (acrylonitrile 26.4 wt%) as the second monomer mixture, in Example 1 to prepare a graft copolymer particulate material.

**Comparative Example 5**

The same method as in Example 1 was performed except for injecting 8.4 parts by weight of styrene and 3.6 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, not injecting t-dodecyl mercaptan as the first molecular weight modifier during the injection of the first monomer mixture, injecting 22.4 parts by weight of styrene and 5.6 parts by weight of acrylonitrile (acrylonitrile 20.0 wt%) instead of 20.6 parts by weight of styrene and 7.4 parts by weight of acrylonitrile (acrylonitrile 26.4 wt%) as the second monomer mixture, and injecting 0.40 parts by weight instead of 0.10 parts by weight of an $\alpha$-methylstyrene dimer as the second molecular weight modifier during injecting the second monomer mixture, in Example 1 to prepare a graft copolymer particulate material.

**Comparative Example 6**

The same method as in Example 1 was performed except for injecting 8.4 parts by weight of styrene and 3.6 parts by weight of acrylonitrile (acrylonitrile 30 wt%) instead of 10.2 parts by weight of styrene and 1.8 parts by weight of acrylonitrile (acrylonitrile 15 wt%) as the first monomer mixture, 0.1 parts by weight of an $\alpha$-methylstyrene dimer of the second molecular weight modifier instead of t-dodecyl mercaptan of the first molecular weight modifier during the injection of the first monomer mixture, 22.4 parts by weight of styrene and 5.6 parts by weight of acrylonitrile (acrylonitrile 20.0 wt%) instead of 20.6 parts by weight of styrene and 7.4 parts by weight of acrylonitrile (acrylonitrile 26.4 wt%) as the second monomer mixture, and 0.20 parts by weight instead of 0.10 parts by weight of an $\alpha$-methylstyrene dimer as the second molecular weight modifier during injecting the second monomer mixture, in Example 1 to prepare a graft copolymer particulate material.

**Experimental Examples**

**Experimental Example 1**

With respect to the graft copolymers prepared in Examples 1 to 12 and Comparative Examples 1 to 6, graft ratios and weight average molecular weights were measured by the methods below and are shown in Tables 1 to 3 together with the composition of each monomer, the weight ratios of a vinylcyan-based monomer in monomer mixtures, and the injection amounts of a fist molecular weight modifier and a second molecular weight modifier.

* Graft ratio (%): 1 g of each of the graft copolymer particulate materials prepared in Examples 1 to 12 and Comparative Examples 1 to 6 was injected into 50 ml of acetone, followed by stirring for 24 hours and performing sol-gel separation using a centrifuge. Then, a precipitate was dried at 80°C to obtain a dried product, the weight of the dried product was measured, and the graft ratio was calculated according to Mathematical Formula 1.

[Mathematical Formula 1]

$$\text{Graft ratio (\%)} = [\{(\text{weight of dried product}) - (\text{weight of conjugated diene-based polymer injected during polymerization})\}/(\text{weight of conjugated diene-based polymer during polymerization})] \times 100$$

* Weight average molecular weight (Mw, g/mol): Each of the dried products in Examples 1 to 12 and Comparative Examples 1 to 6 obtained for measuring the graft ratio was dissolved in tetrahydrofuran (THF), and a weight average molecular weight was measured by gel permeation chromatography (GPC, PL GPC220, Agilent Technologies) under the conditions below.

- Column: Styragel
- Solvent: tetrahydrofuran (THF)
- Flow rate: 1.0 ml/min
- Specimen concentration: 1.0 mg/ml
- Injection amount: 100 ul
- Column temperature: 40°C
- Detector: waters 2414 RI Detector
- Standard: Polystyrene (calibrated with cubic function)
- Data processing: Empower

[Table 1]

| Division | | | Example | | | | | |
|---|---|---|---|---|---|---|---|---|
| | | | 1 | 2 | 3 | 4 | 5 | 6 |
| Conjugated diene-based polymer | PBL[1] | (parts by weight) | 60 | 60 | 60 | 60 | 60 | 60 |
| First monomer mixture | SM[2] | (parts by weight) | 10.2 | 9.6 | 9.0 | 8.4 | 7.2 | 8.4 |
| | AN[3] | (parts by weight) | 1.8 | 2.4 | 3.0 | 3.6 | 4.8 | 3.6 |
| | TDDM[4] | (parts by weight) | 0.20 | 0.20 | 0.20 | 0.20 | 0.20 | 0.15 |
| | AN weight ratio | (wt %) | 15.0 | 20.0 | 25.0 | 30.0 | 40.0 | 30.0 |

(continued)

| Division | | | Example | | | | | |
|---|---|---|---|---|---|---|---|---|
| | | | 1 | 2 | 3 | 4 | 5 | 6 |
| Second monomer mixture | SM[2] | (parts by weight) | 20.6 | 21.2 | 21.8 | 22.4 | 23.6 | 22.4 |
| | AN[3] | (parts by weight) | 7.4 | 6.8 | 6.2 | 5.6 | 4.4 | 5.6 |
| | TDDM[4] | (parts by weight) | 0.10 | 0.10 | 0.10 | 0.10 | 0.10 | 0.10 |
| | AMSD[5] | (parts by weight) | 0.10 | 0.10 | 0.10 | 0.10 | 0.10 | 0.10 |
| | AN weight ratio | (wt %) | 26.4 | 24.3 | 22.1 | 20.0 | 15.7 | 20.0 |
| Graft copolymer | Graft ratio | (%) | 34.2 | 38.1 | 38.6 | 39.5 | 40.3 | 41.4 |
| | Mw | (g/mol) | 81,000 | 83,000 | 84,000 | 85,400 | 88,000 | 84,800 |

1) PBL: polybutadiene latex
2) SM: styrene
3) AN: acrylonitrile
4) TDDM: t-dodecyl mercaptan
5) AMSD: $\alpha$-methylstyrene dimer

[Table 2]

| Division | | | Example | | | | | |
|---|---|---|---|---|---|---|---|---|
| | | | 7 | 8 | 9 | 10 | 11 | 12 |
| Conjugated diene-based polymer | PBL[1] | (parts by weight) | 60 | 60 | 60 | 60 | 65 | 70 |
| First monomer mixture | SM[2] | (parts by weight) | 8.4 | 8.4 | 8.4 | 8.4 | 7.35 | 6.3 |
| | AN[3] | (parts by weight) | 3.6 | 3.6 | 3.6 | 3.6 | 3.15 | 2.7 |
| | TDDM[4] | (parts by weight) | 0.10 | 0.20 | 0.20 | 0.20 | 0.16 | 0.10 |
| | AN weight ratio | (wt %) | 30.0 | 30.0 | 30.0 | 30.0 | 30.0 | 30.0 |

(continued)

| Division | | | Example | | | | | |
|---|---|---|---|---|---|---|---|---|
| | | | 7 | 8 | 9 | 10 | 11 | 12 |
| Second monomer mixture | SM[2] | (parts by weight) | 22.4 | 22.4 | 22.4 | 22.4 | 19.6 | 16.8 |
| | AN[3] | (parts by weight) | 5.6 | 5.6 | 5.6 | 5.6 | 4.9 | 4.2 |
| | TDDM[4] | (parts by weight) | 0.10 | 0.10 | 0.10 | 0.10 | 0.05 | 0.05 |
| | AMSD[5] | (parts by weight) | 0.10 | 0.05 | 0.15 | 0.20 | 0.10 | 0.10 |
| | AN weight ratio | (wt %) | 20.0 | 20.0 | 20.0 | 20.0 | 20.0 | 20.0 |
| Graft copolymer | Graft ratio | (%) | 42.2 | 39.7 | 38.3 | 37.5 | 37.8 | 34.6 |
| | Mw | (g/mol) | 86,000 | 83,500 | 81,800 | 80,400 | 84,300 | 80,200 |

1) PBL: polybutadiene latex
2) SM: styrene
3) AN: acrylonitrile
4) TDDM: t-dodecyl mercaptan
5) AMSD: α-methylstyrene dimer

[Table 3]

| Division | | | Comparative Example | | | | | |
|---|---|---|---|---|---|---|---|---|
| | | | 1 | 2 | 3 | 4 | 5 | 6 |
| Conjugated diene-based polymer | PBL[1] | parts by weight) | 60 | 60 | 60 | 60 | 60 | 60 |
| First monomer mixture | SM[2] | parts by weight) | 8.4 | 12.0 | 10.8 | 8.4 | 8.4 | 8.4 |
| | AN[3] | parts by weight) | 3.6 | - | 1.2 | 3.6 | 3.6 | 3.6 |
| | TDDM[4] | parts by weight) | 0.20 | 0.20 | 0.20 | 0.20 | 0 | 0 |
| | AMSD[5] | parts by weight) | 0 | 0 | 0 | 0 | 0 | 0.1 |
| | AN weight ratio | (wt %) | 30.0 | - | 10.0 | 30.0 | 30.0 | 30.0 |

(continued)

| Division | | | Comparative Example | | | | | |
|---|---|---|---|---|---|---|---|---|
| | | | 1 | 2 | 3 | 4 | 5 | 6 |
| Second monomer mixture | SM[2] | parts by weight) | 22.4 | 18.8 | 20.0 | 19.6 | 22.4 | 22.4 |
| | AN[3] | parts by weight) | 5.6 | 9.2 | 8.0 | 8.4 | 5.6 | 5.6 |
| | TDDM[4] | parts by weight) | 0.10 | 0.10 | 0.10 | 0.10 | 0 | 0 |
| | AMSD[5] | parts by weight) | - | 0.10 | 0.10 | 0.10 | 0.40 | 0.20 |
| | AN weight ratio | (wt %) | 20.0 | 32.9 | 28.6 | 30.0 | 20.0 | 20 |
| Graft copolymer | Graft ratio | (%) | 39.7 | 32.2 | 33.5 | 44.2 | 52.6 | 53.2 |
| | Mw | (g/mol) | 87,200 | 78,000 | 79,900 | 87,400 | 88,300 | 97,000 |

1) PBL: polybutadiene latex

2) SM: styrene

3) AN: acrylonitrile

4) TDDM: t-dodecyl mercaptan

5) AMSD: $\alpha$-methylstyrene dimer

As shown in Tables 1 and 2 above, it could be confirmed that the graft copolymers of Examples 1 to 12, prepared according to the present invention showed suitable levels of graft ratio and weight average molecular weight.

On the contrary, as shown in Table 3, it could be confirmed that Comparative Example 2 which did not include a vinylcyan-based monomer in the first monomer mixture and included an excessive amount of a vinylcyan-based monomer in the second monomer mixture, and Comparative Example 3 which included a small amount of a vinylcyan-based monomer in the first monomer mixture and an excessive amount of a vinylcyan-based monomer in the second monomer mixture, showed lower graft ratios and weight average molecular weights than Examples 1 to 12.

In addition, it could be confirmed that Comparative Example 6 in which a molecular weight modifier was not injected during injecting the first monomer mixture, and a first molecular weight modifier was not injected during injecting the second monomer mixture, and Comparative Example 6 in which a second molecular weight modifier was injected instead of the first molecular weight modifier during injecting the first monomer mixture, and a first molecular weight modifier was not injected during injecting the second monomer mixture, showed higher graft ratios than Examples 1 to 12, and particularly, Comparative Example 6 also showed a higher weight average molecular weight.

**Experimental Example 2**

For each of the graft copolymers prepared in Examples 1 to 12 and Comparative Examples 1 to 6, a first resin composition and a second resin composition were prepared by the methods below, and impact strength and flow index were measured for each resin composition and showed in Tables 4 to 6.

<Preparation of first resin composition>

27.5 parts by weight of each of the graft copolymer particulate materials prepared in Examples 1 to 12 and Comparative Examples 1 to 6, 72.5 parts by weight of a styrene-acrylonitrile copolymer (LG Chem, 92HR), 1.0 part by weight of a lubricant (ethylene bis stearamide), 0.2 parts by weight of magnesium stearate as a stabilizer, and 0.2 parts by weight of distearyl pentaerythritol diphosphate were homogeneously mixed using a Henschel Mixer, and then extruded to manufacture a pellet.

<Preparation of second resin composition>

24 parts by weight of each of the graft copolymer particulate materials prepared in Examples 1 to 12 and Comparative Examples 1 to 6, 76 parts by weight of an $\alpha$-methylenestyrene-acrylonitrile copolymer (LG Chem, 200UH), 1.0 part by weight of a lubricant (ethylene bis stearamide), 0.2 parts by weight of Songnox 1076 (SONGWON Industrial Co.) as a stabilizer, and 0.2 parts by weight of Wingstay-L were homogeneously mixed using a Henschel Mixer, and then extruded to manufacture a pellet.

* Impact strength (kgf·cm/cm): According to an ASTM D256 method, a specimen with a thickness of 1/4 inch was used, a notch was made on the specimen at room temperature (23°C), and notched izod impact strength was measured.

* Flow index (g/10 min): According to an ASTM D1238 method, measurement was conducted under conditions of 220°C and 10 kg.

[Table 4]

| Division | | | Example | | | | | |
|---|---|---|---|---|---|---|---|---|
| | | | 1 | 2 | 3 | 4 | 5 | 6 |
| First resin compos ition | Impact strength | (kgf·c m/ cm) | 33.9 | 34.1 | 34.2 | 34.7 | 34.9 | 35.0 |
| | Flow index | (g/10 min) | 20.3 | 20.0 | 19.9 | 19.8 | 19.4 | 18.8 |
| Second resin compos ition | Impact strength | (kgf·c m/ cm) | 13.5 | 13.7 | 13.9 | 14.9 | 14.2 | 15.1 |
| | Flow index | (g/10 min) | 6.4 | 6.3 | 6.2 | 6.2 | 5.9 | 5.6 |

[Table 5]

| Division | | | Example | | | | | |
|---|---|---|---|---|---|---|---|---|
| | | | 7 | 8 | 9 | 10 | 11 | 12 |
| First resin compos ition | Impact strength | (kgf·c m/cm) | 35.4 | 34.3 | 35.2 | 33.8 | 34.0 | 33.8 |
| | Flow index | (g/10 min) | 17.9 | 19.4 | 20.1 | 20.6 | 21.0 | 21.6 |
| Second resin compos ition | Impact strength | (kgf·c m/cm) | 15.4 | 14.4 | 14.6 | 13.8 | 14.2 | 13.1 |
| | Flow index | (g/10 min) | 5.1 | 6.0 | 6.4 | 6.6 | 6.3 | 6.5 |

[Table 6]

| Division | | | Comparative Example | | | | | |
|---|---|---|---|---|---|---|---|---|
| | | | 1 | 2 | 3 | 4 | 5 | 6 |
| First resin compos ition | Impact strength | (kgf·c m/cm) | 33.4 | 33.0 | 33.4 | 35.6 | 33.1 | 32.8 |
| | Flow index | (g/10 min) | 19.0 | 20.7 | 20.5 | 17.5 | 17.4 | 16.8 |
| Second resin compos ition | Impact strength | (kgf·c m/cm) | 13.9 | 11.9 | 12.4 | 15.6 | 16.2 | 16.5 |
| | Flow index | (g/10 min) | 5.8 | 6.6 | 6.5 | 4.9 | 5.1 | 4.8 |

As shown in Tables 4 to 6, it could be confirmed that each of the first resin composition and the second resin composition including each of the graft copolymers of Examples 1 to 12, prepared according to the present invention, though including different types of matrix resins, showed the same levels or improved levels of flowability and improved impact strength when compared to the first resin composition and the second resin composition, including the graft copolymer of Comparative Example 1 in which the second molecular weight modifier was not injected during injecting the second monomer mixture. Particularly, in cases of Examples 3 to 10, in which the amount of the vinylcyan-based monomer in the first monomer mixture was controlled to 25 wt% or more, and the amount of the vinylcyan-based monomer in the second monomer mixture was controlled to 24 wt% or less, it could be confirmed that effects were maximized even further when compared to Comparative Example 1 and even compared to Examples 1 and 2.

On the contrary, it could be confirmed that both the first resin compositions and the second resin compositions, including the graft copolymers of Comparative Example 2 in which a vinylcyan-based monomer was not included in the first monomer mixture, and an excessive amount of a vinylcyan-based monomer was included in the second monomer mixture, and Comparative Example 3 in which a small amount of a vinylcyan-based monomer was included in the first monomer mixture, and an excessive amount of a vinylcyan-based monomer was included in the second monomer mixture, showed rapidly reduced impact strength. The results come from that the graft ratio and weight average molecular weight of the graft copolymer were insufficiently secured.

In addition, in the cases of Comparative Example 4 in which an excessive amount of a vinylcyan-based monomer was included in the second monomer mixture, Comparative Example 5 in which a molecular weight modifier was not injected during injecting the first monomer mixture, and a first molecular weight modifier was not injected during injecting the second monomer mixture, and Comparative Example 6 in which a second molecular weight modifier was injected instead of the first molecular weight modifier during injecting the first monomer mixture, and a second molecular weight modifier was not injected during injecting the second monomer mixture, it could be confirmed that flow index was rapidly reduced, and particularly, it could be confirmed that in the cases of Comparative Examples 5 and 6, the impact strength of the first resin composition was deteriorated.

From such results, it could be confirmed that the graft copolymer prepared from the method for preparing a graft copolymer according to the present invention, in a resin composition including the graft copolymer and a matrix resin, shows improved flowability and subsequently improved processability while maintaining the same or better levels of impact properties irrespective of the type of the matrix resin.

## Claims

1. A method for preparing a graft copolymer, the method comprising:

   a step of injecting a first monomer mixture and a first molecular weight modifier in batch and polymerizing in the presence of conjugated diene-based polymer latex to prepare preliminary graft copolymer latex comprising a preliminary graft copolymer (S10); and
   a step of injecting a second monomer mixture, a first molecular weight modifier and a second molecular weight modifier that is different from the first molecular weight modifier continuously and polymerizing in the presence of the preliminary graft copolymer latex prepared in step (S10) to prepare graft copolymer latex comprising a graft copolymer (S20),
   wherein the first monomer mixture comprises an aromatic vinyl-based monomer in 60 wt% to 85 wt%, and a vinylcyan-based monomer in 15 wt% to 40 wt%, and
   the second monomer mixture comprises an aromatic vinyl-based monomer in 73 wt% to 99 wt%, and a vinylcyan-based monomer in 1 wt% to 27 wt%.

2. The method for preparing a graft copolymer according to claim 1, wherein

   the conjugated diene-based polymer latex comprises a conjugated diene-based polymer, and
   the conjugated diene-based polymer is injected in 50 parts by weight to 80 parts by weight based on 100 parts by weight of the total injection amount of the conjugated diene-based polymer, the aromatic vinyl-based monomer and the vinylcyan-based monomer.

3. The method for preparing a graft copolymer according to claim 1, wherein the first monomer mixture comprises the vinylcyan-based monomer in 25 wt% to 40 wt%.

4. The method for preparing a graft copolymer according to claim 1, wherein the second monomer mixture comprises the vinylcyan-based monomer in 15 wt% to 25 wt%.

5. The method for preparing a graft copolymer according to claim 1, wherein the first molecular weight modifier is one or more selected from the group consisting of t-dodecyl mercaptan, n-dodecyl mercaptan, octyl mercaptan, carbon tetrachloride, methylene chloride, methylene bromide, tetraethylthiuram disulfide, dipentamethylenethiuram disulfide and diisopropyl xanthogen disulfide.

6. The method for preparing a graft copolymer according to claim 1, wherein a total injection amount of the first molecular weight modifier in step (S10) and step (S20) is 0.20 parts by weight to 0.40 parts by weight based on 100 parts by weight of the total injection amount of the conjugated diene-based polymer, the aromatic vinyl-based monomer and the vinylcyan-based monomer.

7. The method for preparing a graft copolymer according to claim 1, wherein the second molecular weight modifier is one or more selected from the group consisting of an α-methylstyrene dimer, n-dodecyl mercaptan, octyl mercaptan, carbon tetrachloride, methylene chloride, methylene bromide, tetraethylthiuram disulfide, dipentamethylenethiuram disulfide and diisopropyl xanthogen disulfide.

8. The method for preparing a graft copolymer according to claim 1, wherein an injection amount of the second molecular weight modifier in step (S20) is 0.01 parts by weight to 0.40 parts by weight based on 100 parts by weight of the total injection amount of the conjugated diene-based polymer, the aromatic vinyl-based monomer and the vinylcyan-based monomer.

9. A graft copolymer comprising:

   a conjugated diene-based polymer; a first graft layer formed by being penetrated into the conjugated diene-based polymer or at the outside; and a second graft layer formed by wrapping the first graft layer, wherein
   the first graft layer comprises 60 wt% to 85 wt% of an aromatic vinyl-based monomer unit, and 15 wt% to 40 wt% of a vinylcyan-based monomer unit, and
   the second graft layer comprises 73 wt% to 99 wt% of an aromatic vinyl-based monomer unit and 1 wt% to 27 wt% of a vinylcyan-based monomer unit.

10. A resin composition comprising the graft copolymer according to claim 9 and a matrix resin.

11. The resin composition according to claim 10, wherein the matrix resin comprises the aromatic vinyl-based monomer unit and the vinylcyan-based monomer unit.

12. The resin composition according to claim 10, wherein the matrix resin comprises an α-methylstyrene monomer unit and a vinylcyan-based monomer unit.

## INTERNATIONAL SEARCH REPORT

| International application No. |
| --- |
| **PCT/KR2022/011635** |

| A. | CLASSIFICATION OF SUBJECT MATTER |
| --- | --- |
| | **C08F 285/00**(2006.01)i; **C08F 279/04**(2006.01)i |

According to International Patent Classification (IPC) or to both national classification and IPC

| B. | FIELDS SEARCHED |
| --- | --- |

Minimum documentation searched (classification system followed by classification symbols)

C08F 285/00(2006.01); C08F 2/22(2006.01); C08F 279/04(2006.01); C08L 53/00(2006.01); C08L 69/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 그라프트 공중합체(graft copolymer), 분자량 조절제(chain transfer agent), 아크릴 로니트릴(acrylonitrile), 부타디엔(butadiene), 스티렌(styrene)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-0574324 B1 (CHEIL INDUSTRIES INC.) 26 April 2006 (2006-04-26)<br>See claim 1; and paragraphs [0004], [0010], [0015], [0018] and [0036]. | 1-12 |
| A | KR 10-2007-0043478 A (LG CHEM, LTD.) 25 April 2007 (2007-04-25)<br>See claims 1, 3, 5-7 and 10-12. | 1-12 |
| A | KR 10-2008-0074163 A (BAYER MATERIALSCIENCE AG) 12 August 2008 (2008-08-12)<br>See claims 1, 6 and 7. | 1-12 |
| A | KR 10-2005-0068557 A (CHEIL INDUSTRIES INC.) 05 July 2005 (2005-07-05)<br>See claims 1-3, 7 and 8. | 1-12 |
| A | KR 10-2015-0037645 A (LG CHEM, LTD.) 08 April 2015 (2015-04-08)<br>See claims 1-4. | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 November 2022** | **11 November 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/011635**

| Patent document cited in search report | | | Publication date (day/month/year) | Patent family member(s) | | | Publication date (day/month/year) |
|---|---|---|---|---|---|---|---|
| KR | 10-0574324 | B1 | 26 April 2006 | KR | 10-2000-0055262 | A | 05 September 2000 |
| KR | 10-2007-0043478 | A | 25 April 2007 | KR | 10-0822159 | B1 | 17 April 2008 |
| KR | 10-2008-0074163 | A | 12 August 2008 | BR | PI0619502 | A2 | 04 October 2011 |
| | | | | BR | PI0619502 | B1 | 19 December 2017 |
| | | | | CA | 2632605 | A1 | 14 June 2007 |
| | | | | CN | 101336273 | A | 31 December 2008 |
| | | | | CN | 101336273 | B | 16 November 2011 |
| | | | | EP | 1960467 | A1 | 27 August 2008 |
| | | | | EP | 1960467 | B1 | 05 May 2010 |
| | | | | ES | 2342978 | T3 | 20 July 2010 |
| | | | | JP | 2009-518472 | A | 07 May 2009 |
| | | | | JP | 5030965 | B2 | 19 September 2012 |
| | | | | RU | 2008127448 | A | 20 January 2010 |
| | | | | TW | 200734396 | A | 16 September 2007 |
| | | | | TW | I394796 | B | 01 May 2013 |
| | | | | US | 2007-0135568 | A1 | 14 June 2007 |
| | | | | US | 7709573 | B2 | 04 May 2010 |
| | | | | WO | 2007-065577 | A1 | 14 June 2007 |
| KR | 10-2005-0068557 | A | 05 July 2005 | KR | 10-0527095 | B1 | 09 November 2005 |
| KR | 10-2015-0037645 | A | 08 April 2015 | CN | 105189588 | A | 23 December 2015 |
| | | | | CN | 105189588 | B | 12 September 2017 |
| | | | | US | 2016-0222152 | A1 | 04 August 2016 |
| | | | | US | 9790310 | B2 | 17 October 2017 |
| | | | | WO | 2015-047038 | A1 | 02 April 2015 |

Form PCT/ISA/210 (patent family annex) (July 2022)

**EP 4 357 380 A1**

**Patent documents cited in the description**

- KR 1020210104040

- JP 6192346 A